# EUROPEAN PATENT APPLICATION

(11) **EP 1 819 115 A1**
(43) Date of publication of application: **15.08.2007**
(21) Application number: 05814340.5
(22) Date of filing: 08.12.2005
(51) Int. Cl.: H04L 12/66

(54) **ACCESS CONTROLLER**

(30) Priority: 22.12.2004 JP 2004372231
(71) Applicant: MATSUSHITA ELECTRIC INDUSTRIAL CO., LTD., Osaka 571-8501 (JP)
(72) Inventor: KAMIKURA, Atsushi Matsushita Electric Industrial Co. Ltd, Osaka-shi, Osaka 540-6319 (JP); TAMURA, Tomofumi Matsushita Electric Industrial Co. Ltd, Osaka-shi, Osaka 540-6319 (JP); IIDA, Kenichiro Matsushita Electric Industrial Co. Ltd, Osaka-shi, Osaka 540-6319 (JP); HASHIMOTO, Yuji Matsushita Electric Industrial Co. Ltd, Osaka-shi, Osaka 540-6319 (JP); IINO, Satoshi Matsushita Electric Industrial Co. Ltd, Osaka-shi, Osaka 540-6319 (JP)
(74) Representative: Grünecker, Kinkeldey, Stockmair & Schwanhäusser Anwaltssozietät
(86) International application number: PCT/JP2005/022573
(87) International publication number: WO 2006/067973

(57) **Abstract**

An access controller not requiring a large amount of resources such as a memory device and not needing to change the list of secure host devices each time the configuration of a network is changed. On receiving a DNS response through an access control section (103) of the access controller (100) a secure host list creating section (104) of the access controller registers the name of the secure host device contained in the DNS response, the IP address, and the IP address of a communication terminal which is a request of the DNS in a secure host list holding section (105) of the access controller (100) when the IP address of the host device contained in the DNS response is the one of the secure host device. The secure host list creating section (104) discards a packet when the communication terminal which is the packet sender is a normal communication terminal and when the packet address is stored in the secure host list holding section (105) and reports nonaccessiblity to the normal communication terminal.

## Description

### Technical Field

The present invention relates to an access control apparatus that controls a connection request from a communication terminal apparatus to a host apparatus.

### Background Art

A DNS (Domain Name System) performs name resolution between an IP address and a host apparatus. When a connection request is generated from a communication terminal apparatus to a host apparatus, the DNS sends the host apparatus name of the connecting destination to a DNS server specified by the communication terminal apparatus. The DNS server searches the IP address which corresponds to the received host apparatus name and sends back the result to the communication terminal apparatus as a response. Thus, the communication terminal apparatus can know the IP address of the host apparatus to connect with and access the host apparatus.

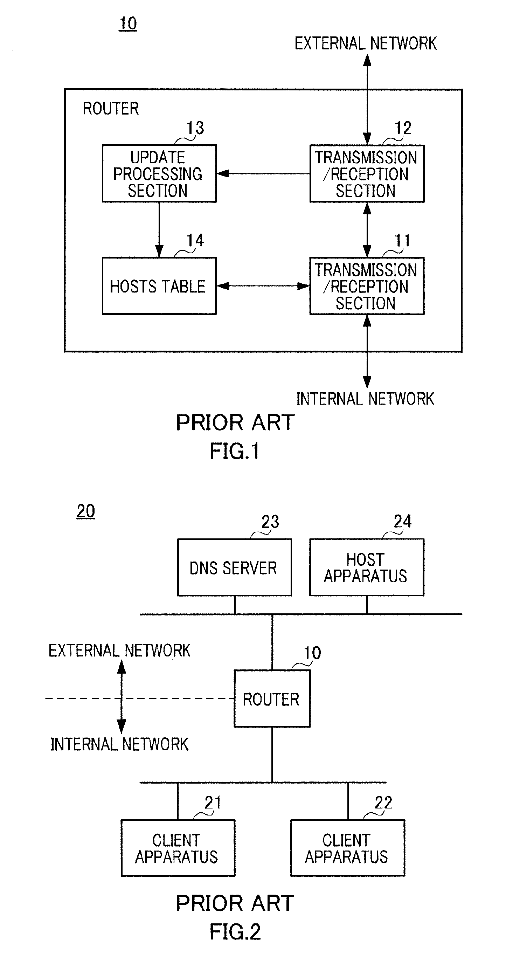

FIG.1 is a block diagram showing the configuration of a conventional router that implements an IP address search system disclosed in Patent Document 1. FIG.2 is a block diagram showing the configuration of a conventional network that simplifies the IP address search system disclosed in Patent Document 1.

As shown in FIG. 1, the conventional router 10 has transmission/reception sections 11 and 12, update processing section 13 and HOSTS table 14.

HOSTS table 14 stores the names and IP addresses of host apparatuses. Update processing section 13 updates the names and IP addresses of the host apparatuses stored in HOSTS table 14.

As shown in FIG.2, conventional network 20 has router 10, client apparatuses 21 and 22, DNS server 23 and host apparatus 24.

Next, an example of operation of the conventional network 20 will be described.

Client apparatus 21 transmits a DNS request to DNS server 23 in order to access host apparatus 24. A DNS response to this DNS request is transmitted to client apparatus 21 from DNS server 23 and at this time, router 10 stores the name and the IP address of host apparatus 24 of the DNS response in HOSTS table 14 through update processing section 13 and then transfers the name and the IP address of host apparatus 24 to client apparatus 21. This allows client apparatus 21 to access host apparatus 24.

Next, when a connection request is generated from client apparatus 22 to host apparatus 24, client apparatus 22 transmits a DNS request to DNS server 23 for name resolution. At this time, router 10 which is provided at the boundary between an internal network and an external network first receives this DNS request and then refers to HOSTS table 14.

Here, when the name of host apparatus 24 included in the DNS request is stored in HOSTS table 14, router 10 does not transfer the DNS request to DNS server 23 and directly transmits a corresponding IP address in the HOSTS table 14 to client apparatus 22.

In this way, conventional router 10 stores the DNS response, and therefore it is possible to reduce the amount of DNS requests to be sent out to the external network and reduce traffic.

Here, a secure host apparatus which has a secure content and a general host apparatus are provided as types of host apparatuses. There are also various types of client apparatuses such as a secure communication terminal apparatus which can access a secure host apparatus which is authenticated in advance and a general host apparatus, and a general communication terminal apparatus which can only access a general host apparatus.

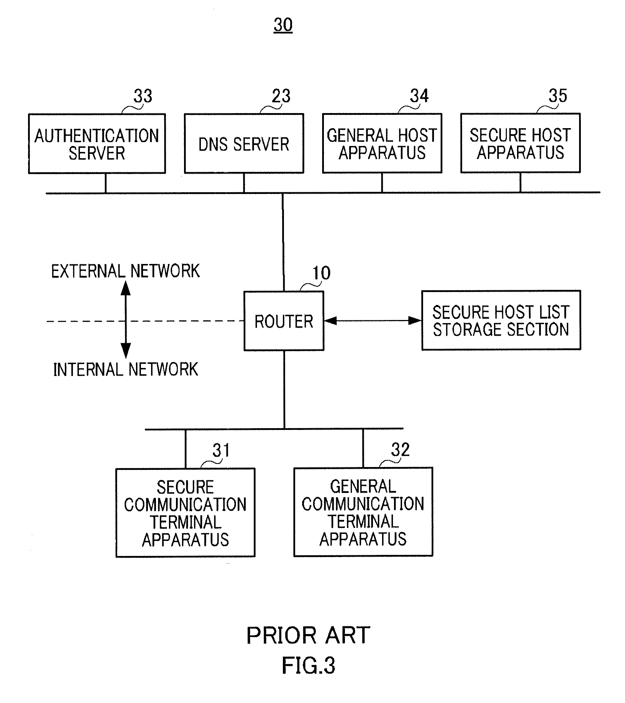

Another conventional network in this case will be described with reference to FIG.3. FIG.3 is a block diagram showing the configuration of another conventional network.

Other conventional network 30 shown in FIG.3 has a configuration that provides, in conventional network 20, general host apparatus 34 and secure host apparatus 35. in place of host apparatus 24, provides secure communication terminal apparatus 31 and general communication terminal apparatus 32 in place of client apparatuses 21 and 22, and adds authentication server 33.

Secure communication terminal apparatus 31 is a communication terminal apparatus which is authenticated in advance by authentication server 33. Secure communication terminal apparatus 31 can access secure host apparatus 35 and general host apparatus 34. Here, access from general communication terminal apparatus 32 to secure host apparatus 35 is not permitted, and therefore a connection request from general communication terminal apparatus 32 to secure host apparatus 35 leads to an increase in wasteful traffic of the network.

There is also a method of performing access control through router 10 at the boundary between the internal network and the external network but when access control is performed through router 10 or a gateway apparatus using a conventional technology, it is necessary for router 10 or the gateway apparatus to store a list of all secure host apparatuses for determining access to secure host apparatus 35.
Patent Document: 1 Japanese Patent Application Laid-Open No.HEI11-340984

### Disclosure of Invention

### Problems to be Solved by the Invention

However, in the conventional technology, when router 10 performs access control, although all secure host apparatuses may not likely be accessed, a list of all secure host apparatuses need to be stored, and therefore there is a problem of requiring a large amount of resources such as a memory apparatus.

In the conventional technology, there is also a problem that the list must be changed every time the network configuration changes.

It is an object of the present invention to provide an access control apparatus that does not require a large amount of resources such as a memory apparatus and that eliminates the necessity for changing the list of secure host apparatuses every time the network configuration changes.

### Means for Solving the Problem

A first aspect of the present invention adopts a configuration including: a section that, when an internet protocol address of a host apparatus included in a domain name system response in a domain name system is an internet protocol address of a general host apparatus, sends out a packet related to the domain name system response to an internal network; a registration section that, when the internet protocol address of the host apparatus included in the domain name system response is an internet protocol address of a secure host apparatus, registers a name of the secure host apparatus, an internet protocol address of the secure host apparatus and an internet protocol address of a communication terminal apparatus of a domain name system request source included in the domain name system response in a secure host list storage section; a section that, when the destination of the domain name system response is a secure communication terminal apparatus, sends out the packet related to the domain name system response to the internal network; an access failure reporting section that, when a destination of the domain name system response is a general communication terminal apparatus, discards the packet related to the domain name system response and reports to the general communication terminal apparatus that access is not permitted; a section that, when a communication terminal apparatus of a packet transmission source is a secure communication terminal apparatus, sends out the packet to an external network; a section that, when a communication terminal apparatus of the packet transmission source is the general communication terminal apparatus and a packet destination is not included in the secure host list storage section, sends out the packet to the external network; and an access failure reporting section that, when the communication terminal apparatus of the packet transmission source is the general communication terminal apparatus and the packet destination is included in the secure host list storage section, discards the packet and reports to the general communication terminal apparatus that access is not permitted.

A second aspect of the present invention adopts a configuration including: a section that, when a type of a host apparatus included in a domain name system response relates to a general host apparatus, sends out a packet related to the domain name system response to an internal network; a registration section that, when the type of the host apparatus included in the domain name system response relates to a secure host apparatus, registers a name of the secure host apparatus, an internet protocol address of the secure host apparatus and an internet protocol address of a communication terminal apparatus of a domain name system request source included in the domain name system response in a secure host list storage section; a section that, when the destination of the domain name system response is a secure communication terminal apparatus, sends out the packet related to the domain name system response to the internal network; an access failure reporting section that, when a destination of the domain name system response is a general communication terminal apparatus, discards the packet related to the domain name system response and reports to the general communication terminal apparatus that access is not permitted; a section that, when a communication terminal apparatus of a packet transmission source is a secure communication terminal apparatus, sends out the packet to an external network; a section that, when a communication terminal apparatus of the packet transmission source is the general communication terminal apparatus and a packet destination is not included in the secure host list storage section, sends out the packet to the external network; and an access failure reporting section that, when the communication terminal apparatus of the packet transmission source is the general communication terminal apparatus and the packet destination is included in the secure host list storage section, discards the packet and reports to the general communication terminal apparatus that access is not permitted.

A third aspect of the present invention adopts a configuration including: a section that, when a destination of a domain name system response is a general communication terminal apparatus, sends out a packet related to the domain name system response to an internal network; a registration section that, when the destination of the domain name system response is a secure host apparatus, registers a name of the secure host apparatus, an internet protocol address of the secure host apparatus and an internet protocol address of a communication terminal apparatus of a domain name system request source included in the domain name system response in a secure host list storage section; a section that, when a communication terminal apparatus of a packet transmission source is a secure communication terminal apparatus, sends out the packet to an external network; a section that, when a communication terminal apparatus of the packet transmission source is the general communication terminal apparatus and a packet destination is not included in the secure host list storage section, sends out the packet to the external network; and an access failure reporting section that, when the communication terminal apparatus of the packet transmission source is the general communication terminal apparatus and the packet destination is included in the secure host list storage section, discards the packet and reports to the general communication terminal apparatus that access is not permitted.

### Advantageous Effect of the Invention

The present invention registers the name of a secure host apparatus, the IP address of the secure host apparatus and the IP address of the communication terminal apparatus of the DNS request source included in the DNS response in the secure host list storage section, discards a packet when the communication terminal apparatus of the packet transmission source is a general communication terminal apparatus and the packet destination is included in the secure host list storage section, and reports to the general communication terminal apparatus that access is not permitted so that it eliminates the necessity to provide a large amount of resources such as a memory apparatus and change a list of secure host apparatuses every time the network configuration changes.

### Brief Description of Drawings

FIG.1 is a block diagram showing the configuration of a conventional router;
FIG.2 is a block diagram showing the configuration of a conventional network;
FIG.3 is a block diagram showing the configuration of another conventional network;
FIG.4 is a block diagram showing the configuration of an access control apparatus according to Embodiment 1 of the present invention;
FIG.5 illustrates a secure host list used for the access control apparatus according to Embodiment 1 of the present invention;
FIG.6 illustrates a terminal information list used for the access control apparatus according to Embodiment 1 of the present invention;
FIG.7 is a block diagram showing a network configuration having the access control apparatus according to Embodiment 1 of the present invention;
FIG.8 is a flow chart illustrating the operation of the secure host list creation section of the access control apparatus according to Embodiment 1 of the present invention;
FIG.9 is a flow chart illustrating the operation of the access control apparatus according to Embodiment 1 of the present invention when receiving a packet from an external network;
FIG.10 is a flow chart illustrating the operation of the access control apparatus according to Embodiment 1 of the present invention when receiving a packet from an internal network;
FIG.11 is a flow chart illustrating the operation of creating a secure host list in the operation of an access control apparatus according to Embodiment 2 of the present invention;
FIG.12 is a block diagram showing a network configuration having an access control apparatus according to Embodiment 3 of the present invention; and
FIG.13 is a flow chart illustrating the operation of creating a secure host list in the operation of the access control apparatus according to Embodiment 3 of the present invention.

### Best Mode for Carrying Out the Invention

Hereinafter, embodiments of the present invention will be described with reference to the attached drawings.

### (Embodiment 1)

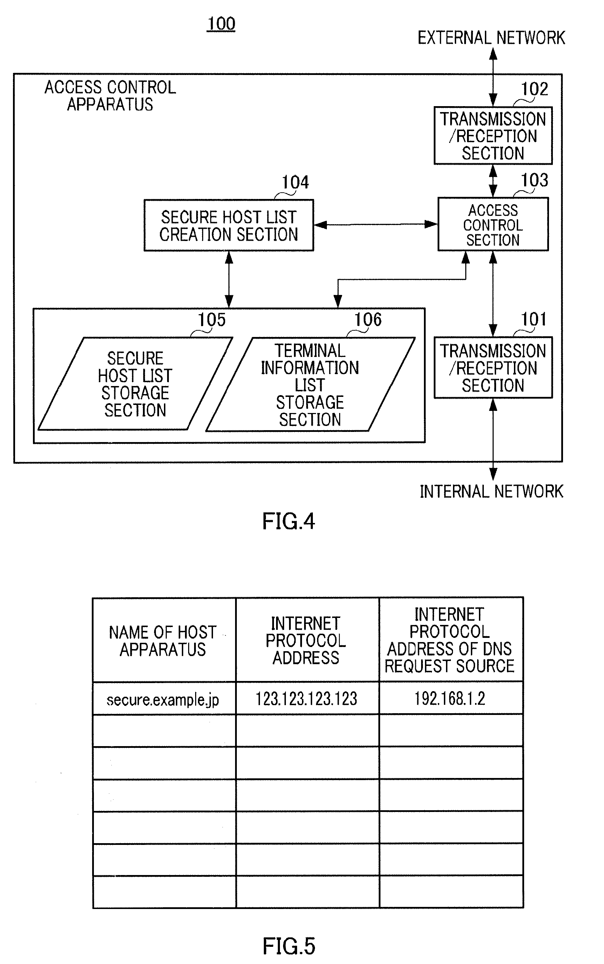

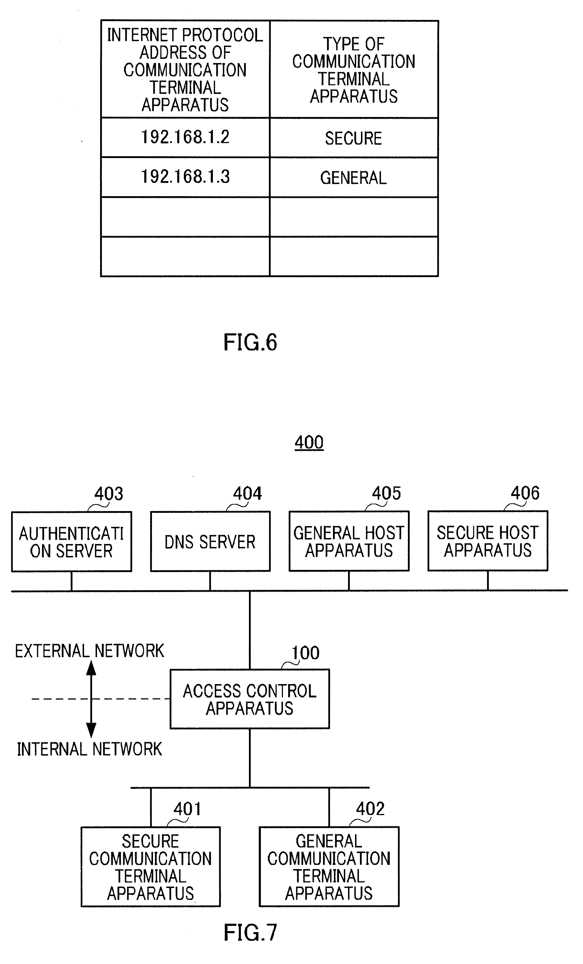

FIG.4 is a block diagram showing the configuration of an access control apparatus according to Embodiment 1 of the present invention. FIG.5 illustrates a secure host list used for the access control apparatus according to Embodiment 1 of the present invention. FIG.6 illustrates a terminal information list used for the access control apparatus according to Embodiment 1 of the present invention.

As shown in FIG . 4, access control apparatus 100 according to Embodiment 1 of the present invention has transmission/reception sections 101 and 102, access control section 103, secure host list creation section 104, secure host list storage section 105 and terminal information list storage section 106. Secure host list storage section 105 stores a secure host list. Terminal information list storage section 106 stores a terminal information list.

The two networks which sandwich access control apparatus 100 are assumed to be an internal network and an external network.

Transmission/reception section 101 transmits/receives packets between the internal network and access control section 103. Transmission/reception section 102 transmits/receives packets between the external network and access control section 103.

Access control section 103 receives packets from the internal network through transmission/reception section 101 based on the secure host list and the terminal information list stored in secure host list storage section 105 and terminal information list storage section 106, and performs access control over these packets. Furthermore, access control section 103 detects a DNS response from the external network in a DNS (Domain Name System) and transfers the DNS response to secure host list creation section 104.

When the DNS response is returned from the external network and is transferred by access control section 103, secure host list creation section 104 extracts and registers in secure host list storage section 105 the DNS response about secure host apparatuses.

Information of the secure host list is information on a list of secure host apparatuses having secure contents as shown in FIG. 5 and is information on the names of secure host apparatuses, the IP addresses of the secure host apparatuses and the IP addresses of communication terminal apparatuses of DNS request source which send DNS requests to the corresponding secure host apparatuses.

As shown in FIG.6, information of the terminal information list is information on communication terminal apparatuses connected to access control apparatus 100 through the internal network and is information of terminal IP addresses which are the IP addresses of communication terminal apparatuses and information as to whether communication terminal apparatuses are authenticated secure communication terminal apparatuses or unauthenticated general communication terminal apparatuses.

Here, the creation of a secure host list will be described. FIG.7 is a block diagram showing the configuration of network 400 having access control apparatus 100 according to Embodiment 1 of the present invention.

Network 400 has access control apparatus 100, secure communication terminal apparatus 401, general communication terminal apparatus 402, authentication server 403, DNS server 404, general host apparatus 405 and secure host apparatus 406.

Secure communication terminal apparatus 401 and general communication terminal apparatus 402 constitute the internal network. Authentication server 403, DNS server 404, general host apparatus 405 and secure host apparatus 406 constitute the external network.

In network 400 in FIG.7, the address space of secure host apparatus 406 is separated from that of general host apparatus 405, and access control apparatus 100 stores address space allocation information in secure host list creation section 104.

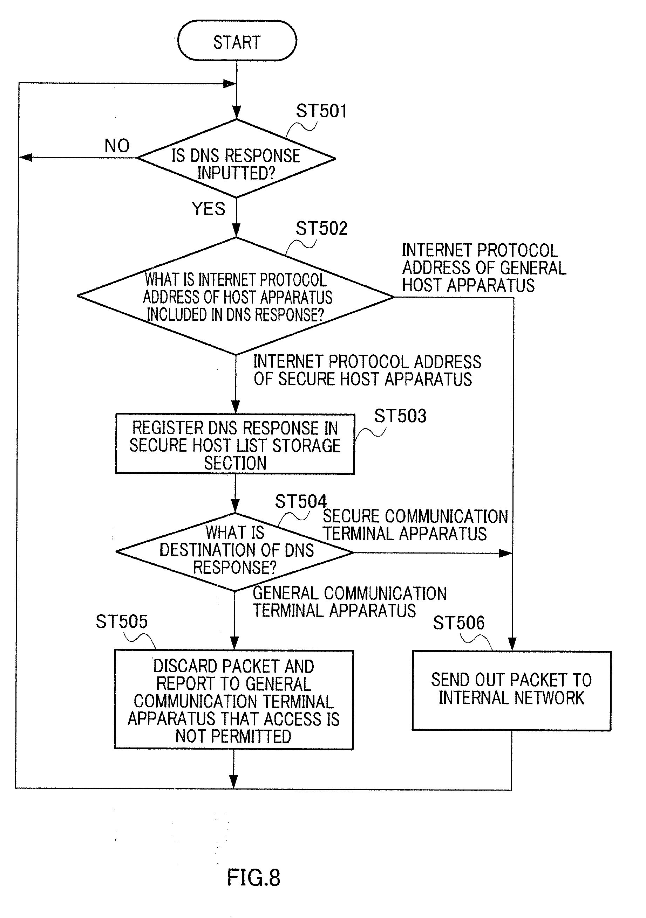

Next, the operation of secure host list creation section 104 of access control apparatus 100 according to Embodiment 1 of the present invention will be described with reference to FIG.8 together with FIG.4 to FIG.7. FIG.8 is a flow chart illustrating the operation of secure host list creation section 104 of access control apparatus 100 according to Embodiment 1 of the present invention.

As shown in FIG.8, in step ST501, secure host list creation section 104 determines whether or not a DNS response is inputted. In step ST501, when a DNS response is inputted, secure host list creation section 104 determines what the IP address of the host apparatus included in the DNS response is (step ST502).

In step ST502, when the IP address of the host apparatus included in the DNS response is the IP address of a secure host apparatus, secure host list creation section 104 registers this DNS response (that is, the name of the secure host apparatus, the IP address of the secure host apparatus and the IP address of a communication terminal apparatus of the DNS request source included in this DNS response) in the secure host list of secure host list storage section 105 (step ST503).

Next, in step ST504, secure host list creation section 104 determines where the destination of the DNS response is. When, in step ST504, the destination of the DNS response is a general communication terminal apparatus, secure host list creation section 104 discards the packet and reports to the general communication terminal apparatus that access is not permitted (step ST505) .

When, in step ST502, the IP address of the host apparatus included in the DNS response is the IP address of a general host apparatus or when, in step ST504, the destination of the DNS response is a secure communication terminal apparatus, secure host list creation section 104 sends out the packet to the internal network (step ST506) .

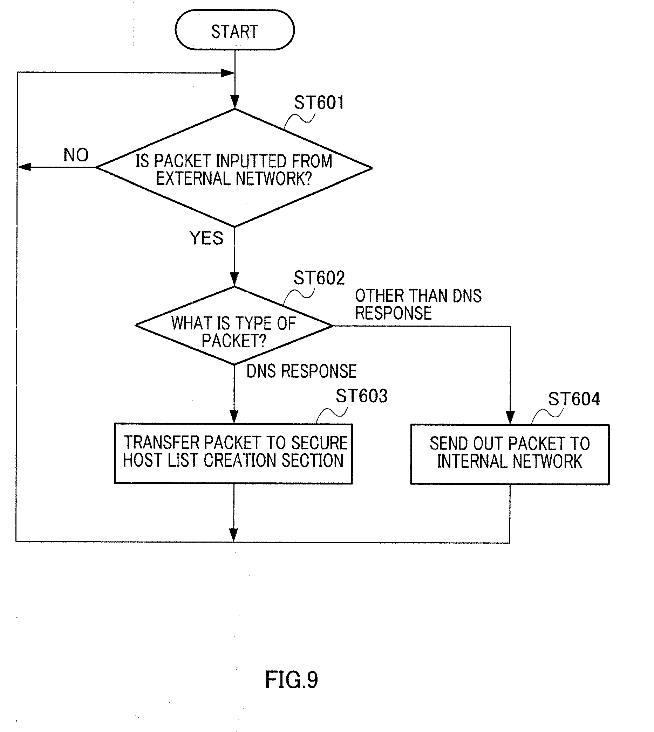

Next, theoperationwhenaccess control apparatus 100 according to Embodiment 1 of the present invention receives a packet from the external network will be described with reference to FIG.9 together with FIG.4 to FIG.7. FIG.9 is a flow chart illustrating the operation of access control apparatus 100 according to Embodiment 1 of the present invention when receiving a packet from the external network.

As shown in FIG.9, in step ST601, access control section 103 determines whether or not a packet is inputted from the external network. When, in step ST601, access control section 103 determines that a packet is inputted from the external network, access control section 103 determines what the type of the packet is (step ST602) .

When, in step ST602, the type of the packet is a DNS response, access control section 103 transfers the packet to secure host list creation section 104 (step ST603). When, in step ST602, the type of the packet is other than a DNS response, access control section 103 sends out the packet to the internal network (step ST604) .

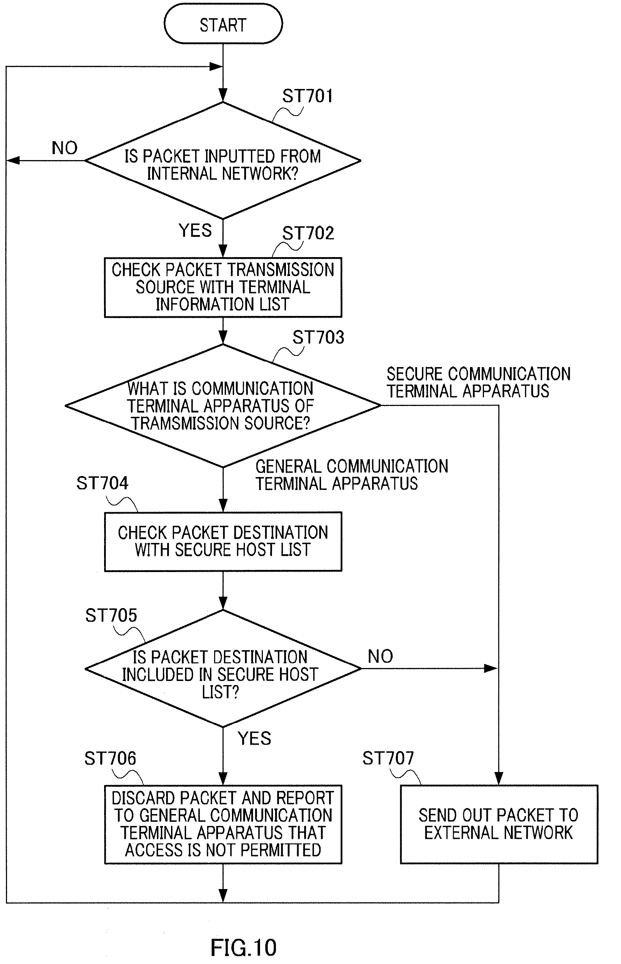

Next, the operation of access control apparatus 100 according to Embodiment 1 of the present invention when receiving a packet from the internal network will be described with reference to FIG. 10 together with FIG.4 to FIG.7. FIG.10 is a flow chart illustrating the operation when access control apparatus 100 according to Embodiment 1 of the present invention receives a packet from the internal network.

As shown in FIG.10, in step ST701, access control section 103 determines whether or not a packet is inputted from the internal network. When, in step ST701, access control section 103 determines that a packet is inputted from the internal network, access control section 103 checks the packet transmission source with the terminal information list (step ST702) and access control section 103 determines what the communication terminal apparatus of the transmission source is (step ST703).

When, in step ST703, the communication terminal apparatus of the transmission source is a general communication terminal apparatus, access control section 103 checks the destination of the packet with the secure host list (step ST704) and access control section 103 determines whether or not the destination of the packet is included in the secure host list (step ST705).

When, in step ST705, the destination of the packet is included in the secure host list, access control section 103 discards the packet and reports to the general communication terminal apparatus that access is not permitted (step ST706).

When, in step ST703, the communication terminal apparatus of the transmission source is a secure communication terminal apparatus or when, in step ST705, the destination of the packet is not included in the secure host list, access control section 103 sends out the packet to the external network (step ST707).

Embodiment 1 provides, in access control apparatus 100, secure host list storage section 105 that stores host information on hosts in the first network (external network), transmission/reception section 101 that receives a DNS request for obtaining host information in the first network from a terminal in the second network (internal network) and access control section 103 and secure host list creation section 104 as a control means that transmits the DNS response including registered host information to the terminal when host information related to the received DNS request is registered in secure host list storage section 105, transmits the DNS request to the outside (DNS server 404) when host information for the received DNS request is not registered in secure host list storage section 105, obtains host information included in the DNS response for the DNS request and registers host information in secure host list storage section 105 and the control means registers only host information on secure hosts in secure host list storage section 105.

Thus, secure host list storage section 105 stores only host information on secure hosts and it is possible to eliminate the necessity for a large amount of resources such as a memory.

Furthermore, access control apparatus 100 has terminal information list storage section 106 that stores terminal information on terminals in the second network, and, when terminal information of the transmission source terminal of the DNS request indicates a general terminal which is not a secure terminal and host information for the DNS request is registered in the host information storage means, and when terminal information of the transmission source terminal of the packet indicates a general terminal and host information related to the DNS request is not registered in the host information storage means and host information included in the DNS response to the DNS request transmitted to the outside (DNS server 404) indicates a secure host, the control means discards the DNS request and controls transmission of a report to the transmission source terminal that access is not permitted.

Thus, unnecessary packets are not transmitted to the first network (external network) so that it is possible to reduce traffic of the overall network and also reduce the amount of packet processing in the host which is the destination.

Host information is the IP address of a host, and the control means stores respectively different address space allocation information of the secure host and a general host and, only when an IP address included in the address space as the obtained host information relates to a secure host, registers the IP address.

### (Embodiment 2)

Next, Embodiment 2 of the present invention will be described with reference to the attached drawings. An access control apparatus according to Embodiment 2 of the present invention has the same configuration as that of access control apparatus 100 according to Embodiment 1 of the present invention. In Embodiment 2 of the present invention, the address space of secure host apparatus 406 is not separated from that of general host apparatus 405, and access control section 103 does not store the address space.

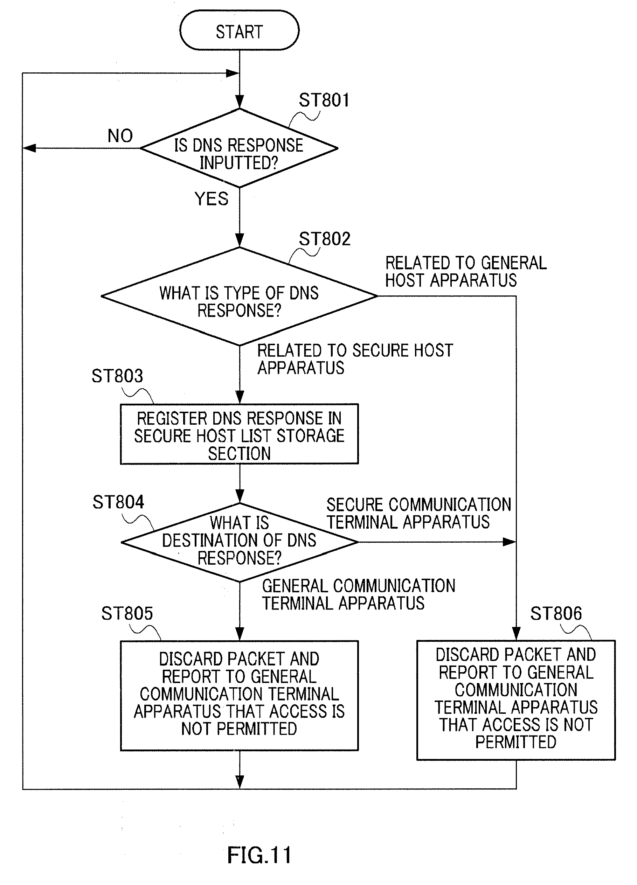

The operation of the access control apparatus according to Embodiment 2 of the present invention differs from the operation of access control apparatus 100 according to Embodiment 1 of the present invention only in the operation of creating a secure host list. FIG.11 is a flow chart illustrating the operation of creating a secure host list in the operation of the access control apparatus according to Embodiment 2 of the present invention.

In network 400 in FIG.7, it is assumed that DNS server 404 stores information as to whether a registered host apparatus is secure host apparatus 406 or general host apparatus 405, and can add information on the type of the host apparatus as a DNS response. For example, DNS server 404 sends information on the type of the host apparatus mapped to such as a VLAN tag ID or TOS field of an IP at the time of the DNS response. Which layer should be used for identification of information on the host apparatus is not limited.

Next, the operation of creating a secure host list in the operation of the access control apparatus according to Embodiment 2 of the present inventionwill be described.

When secure communication terminal apparatus 401 or general communication terminal apparatus 402 generates a DNS request about secure host apparatus 406 and DNS server 404 returns a DNS response with type information of the host apparatus added, access control apparatus 100 receives this.

As shown in FIG.11, in step ST801, secure host list creation section 104 determines whether or not a DNS response is inputted. When, in step ST801, secure host list creation section 104 determines that a DNS response is inputted, secure host list creation section 104 determines what type the DNS response is (step ST802) .

When, in step ST802, the type of the DNS response relates to the secure host apparatus, secure host list creation section 104 registers the DNS response (that is, the name of the secure host apparatus, the IP address of the secure host apparatus and the IP address of the DNS request source communication terminal apparatus included in this DNS response) in the secure host list of secure host list storage section 105 (step ST803).

Next, in step ST804, secure host list creation section 104 determines where the destination of the DNS response is. When, in step ST804, the destination of the DNS response is a general communication terminal apparatus, secure host list creation section 104 discards the packet and reports to the general communication terminal apparatus that access is not permitted (step ST805) .

When, in step ST802, the type of the DNS response relates to a general host apparatus or when, in step ST804, the destination of the DNS response is a secure communication terminal apparatus, secure host list creation section 104 sends out a packet to the internal network (step ST806).

Access control section 103 of access control apparatus 100 according to Embodiment 2 of the present invention has the same operation as in access control section 103 of the access control apparatus according to Embodiment 1 of the present invention.

Embodiment 2 provides, in access control apparatus 100, secure host list storage section 105 that stores host information on hosts in the first network (external network), transmission/reception section 101 that receives a DNS request for obtaining host information in the first network from a terminal in the second network (internal network) and access control section 103 and secure host list creation section 104 as a control means that transmits the DNS response including registered host information to the terminal when host information related to the received DNS request is registered in secure host list storage section 105, transmits the DNS request to the outside (DNS server 404) when host information for the received DNS request is not registered in secure host list storage section 105, obtains host information included in the DNS response for the DNS request and registers the host information in secure host list storage section 105, and the control means registers only host information on secure hosts in secure host storage section 105.

Furthermore, the obtained host information includes host type information indicating whether the host type is secure or general and the control means the registers obtained host information only when host type information indicates a secure host.

### (Embodiment 3)

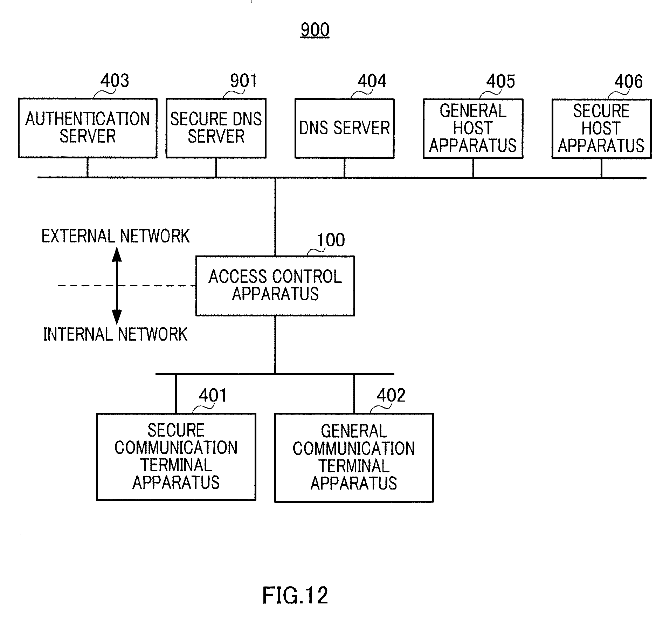

Next, Embodiment 3 of the present invention will be described with reference to the drawings. FIG.12 is a block diagram showing the configuration of a network having an access control apparatus according to Embodiment 3 of the present invention. In the network having the access control apparatus according to Embodiment 3 of the present invention, the same components as those of the network having the access control apparatus according to Embodiment 1 of the present invention shown in FIG.7 are allotted the same reference numerals and description thereof will be omitted.

Network 900 according to Embodiment 3 of the present invention has the configuration that adds secure DNS server 901 in network 400 according to Embodiment 1 of the present invention. In network 900 according to Embodiment 3 of the present invention, the address space of secure host apparatus 406 is not separated from that of general host apparatus 405 and access control section 103 does not store the address space.

Embodiment 3 of the present invention differs from Embodiments 1 and 2 of the present invention only in creating a secure host list. There are two types of DNS servers, namely, secure DNS servers 901 and general DNS server 404. Secure DNS server 901 has DNS information on secure host apparatus 406 and receives only a DNS request from secure communication terminal apparatus 401.

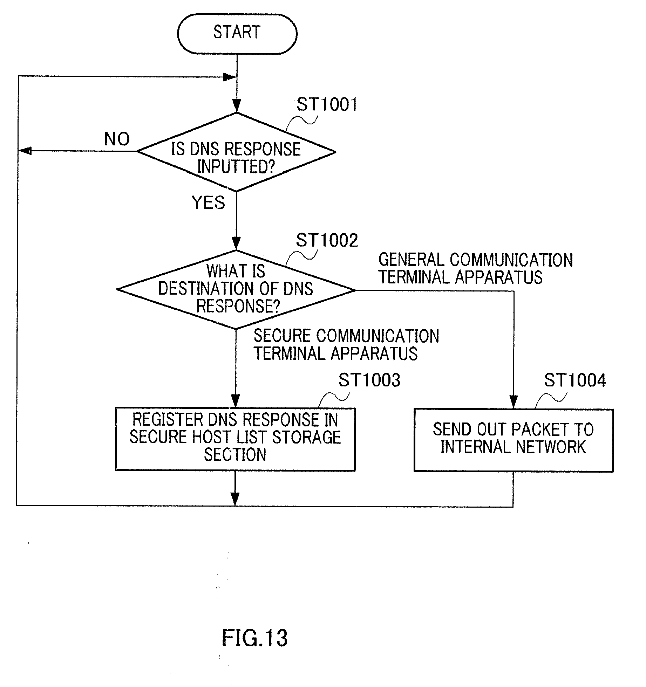

Next, the operation of creating a secure host list in the operation of access control apparatus 103 according to Embodiment 3 of the present invention will be described. FIG.13 is a flow chart illustrating the operation of creating a secure host list in the operation of access control apparatus 103 according to Embodiment 3 of the present invention.

When a DNS request is generated from secure communication terminal apparatus 401 in an internal network and a DNS response is returned from DNS server 901, access control apparatus 100 receives this.

As shown in FIG.13, in step ST1001, access control section 103 determines whether or not a DNS response is inputted. When, in step ST1001, access control section 103 determines that a DNS response is inputted, access control section 103 determines where the destination of the DNS response is (step ST1002).

When, in step ST1002, the destination of the DNS response is a secure communication terminal apparatus, access control section 103 registers the DNS response (that is, the name of the secure host apparatus, the IP address of the secure host apparatus and the IP address of a communication terminal apparatus of the DNS request source included in this DNS response) in the secure host list of secure host list storage section 105 (step ST1003) . When, in step ST1002, the destination of the DNS response is a general communication terminal apparatus, access control section 103 sends out a packet to an internal network (step ST1004).

Access control section 103 of access control apparatus 100 according to Embodiment 3 of the present invention has the same operation as in access control section 103 of access control apparatus 100 according to Embodiment 1 of the present invention. The present application is based on Japanese Patent Application No.2004-372231, filed on December 22, 2004, the entire content of which is expressly incorporated by reference herein.

### Industrial Applicability

The present invention has the effect of not requiring a large amount of resources such as a memory apparatus and eliminating the necessity for changing a list of secure host apparatuses when a network configuration changes and is useful for an access control apparatus.

## Claims

1. An access control apparatus comprising:
a section that, when an internet protocol address of a host apparatus included in a domain name system response in a domain name system is an internet protocol address of a general host apparatus, sends out a packet related to the domain name system response to an internal network;
a registration section that, when the internet protocol address of the host apparatus included in the domain name system response is an internet protocol address of a secure host apparatus, registers a name of the secure host apparatus, an internet protocol address of the secure host apparatus and an internet protocol address of a communication terminal apparatus of a domain name system request source included in the domain name system response in a secure host list storage section;
a section that, when the destination of the domain name system response is a secure communication terminal apparatus, sends out the packet related to the domain name system response to the internal network;
an access failure reporting section that, when a destination of the domain name system response is a general communication terminal apparatus, discards the packet related to the domain name system response and reports to the general communication terminal apparatus that access is not permitted;
a section that, when a communication terminal apparatus of a packet transmission source is a secure communication terminal apparatus, sends out the packet to an external network;
a section that, when a communication terminal apparatus of the packet transmission source is the general communication terminal apparatus and a packet destination is not included in the secure host list storage section, sends out the packet to the external network; and
an access failure reporting section that, when the communication terminal apparatus of the packet transmission source is the general communication terminal apparatus and the packet destination is included in the secure host list storage section, discards the packet and reports to the general communication terminal apparatus that access is not permitted.

2. An access control apparatus comprising:
a section that, when a type of a host apparatus included in a domain name system response relates to a general host apparatus, sends out a packet related to the domain name system response to an internal network;
a registration section that, when the type of the host apparatus included in the domain name system response relates to a secure host apparatus, registers a name of the secure host apparatus, an internet protocol address of the secure host apparatus and an internet protocol address of a communication terminal apparatus of a domain name system request source included in the domain name system response in a secure host list storage section;
a section that, when the destination of the domain name system response is a secure communication terminal apparatus, sends out the packet related to the domain name system response to the internal network;
an access failure reporting section that, when a destination of the domain name system response is a general communication terminal apparatus, discards the packet related to the domain name system response and reports to the general communication terminal apparatus that access is not permitted;
a section that, when a communication terminal apparatus of a packet transmission source is a secure communication terminal apparatus, sends out the packet to an external network;
a section that, when a communication terminal apparatus of the packet transmission source is the general communication terminal apparatus and a packet destination is not included in the secure host list storage section, sends out the packet to the external network; and
an access failure reporting section that, when the communication terminal apparatus of the packet transmission source is the general communication terminal apparatus and the packet destination is included in the secure host list storage section, discards the packet and reports to the general communication terminal apparatus that access is not permitted.

3. An access control apparatus comprising:
a section that, when a destination of a domain name system response is a general communication terminal apparatus, sends out a packet related to the domain name system response to an internal network;
a registration section that, when the destination of the domain name system response is a secure host apparatus, registers a name of the secure host apparatus, an internet protocol address of the secure host apparatus and an internet protocol address of a communication terminal apparatus of a domain name system request source included in the domain name system response in a secure host list storage section;
a section that, when a communication terminal apparatus of a packet transmission source is a secure communication terminal apparatus, sends out the packet to an external network;
a section that, when a communication terminal apparatus of the packet transmission source is the general communication terminal apparatus and a packet destination is not included in the secure host list storage section, sends out the packet to the external network; and
an access failure reporting section that, when the communication terminal apparatus of the packet transmission source is the general communication terminal apparatus and the packet destination is included in the secure host list storage section, discards the packet and reports to the general communication terminal apparatus that access is not permitted.
